# EUROPEAN PATENT APPLICATION

(11) **EP 4 503 323 A1**
(43) Date of publication of application: **05.02.2025**
(21) Application number: 23893359.2
(22) Date of filing: 12.09.2023
(51) Int. Cl.: H01M 50/552, H01M 50/528, H01M 50/572

(54) **BATTERY AND ELECTRONIC DEVICE**

(30) Priority: 25.11.2022 CN 202223141986 U; 25.11.2022 CN 202223162078 U
(71) Applicant: Zhuhai Cosmx Power Co., Ltd., Zhuhai, Guangdong 519180 (CN)
(72) Inventor: WANG, Xiaobo, Zhuhai, Guangdong 519180 (CN); ZONG, Yanzhen, Zhuhai, Guangdong 519180 (CN)
(74) Representative: Murgitroyd & Company
(86) International application number: PCT/CN2023/118240
(87) International publication number: WO 2024/109266

(57) **Abstract**

Disclosure are a battery and an electronic device. The battery includes a battery cell, where the battery cell includes a bare cell and a case, the bare cell is provided with tabs, the case encloses the bare cell, an electrode end of the battery cell is provided with a recess and electrodes, and the electrodes are electrically connected to the tabs, respectively; a protective plate module, where at least part of the protective plate module is matched with the recess, and the protective plate module is electrically connected to the electrodes; an insulating spacer, where the insulating spacer is disposed between the battery cell and the protective plate module to separate the battery cell from the protective plate module. According to the battery of the present disclosure, the recess is disposed at an end face of the electrode end of the battery cell, and at least part of the protective plate module is disposed in the recess, so that a space utilization rate of the battery may be improved, a length of the battery is shortened, thereby further improving an energy density.

## Description

### TECHNICAL FIELD

The present disclosure relates to the field of energy storage technologies, and in particular, to a battery and an electronic device.

### BACKGROUND

With the development of a battery technology, more and more electronic devices use batteries as energy storage and energy supply devices.

As electronic devices become more intelligent in controlling power consumption, more electronic components are gradually integrated on a protective board of a battery. An increase in the electronic components leads to an increase in a size of the battery, which is not conducive to an optimization of structural layout and an improvement of an energy density of the battery. Therefore, it is necessary to provide a new solution for a layout of an internal structure of the battery to improve a space utilization rate of the battery.

### SUMMARY

The present disclosure provides a battery and an electronic device, where the battery has a higher space utilization rate, so that an energy density of the battery is relatively high.

A first aspect of the present disclosure provides a battery, includes a battery cell, where the battery cell includes a bare cell and a case, the battery cell is provided with tabs, the case encloses the bare cell, an electrode end of the case is provided with a recess and electrodes, and the electrodes are electrically connected to the tabs, respectively; a protective plate module, where at least part of a structure of the protective plate module is matched with the recess, and the protective plate module is electrically connected to the electrodes; an insulating spacer, where the insulating spacer is disposed between the battery cell and the protective plate module to separate the battery cell from the protective plate module.

According to the battery of the present disclosure, the recess is disposed at the electrode end of the bare cell, and at least part of the protective plate module is disposed in the recess, so that a space utilization rate may be improved, an overall length of the battery may be shortened, and an energy density of the battery is greater under a same size.

Optionally, the recess and the electrodes are staggered in a horizontal direction, the protective plate module includes a module body and an electrode connection plate, the module body is located in the recess, one end of the electrode connection plate is connected to the module body, and the other end of the electrode connection plate extends to an upper side of the electrodes and is electrically connected to the electrodes.

According to some embodiments of the present disclosure, the module body includes a substrate and an electronic component, and the electronic component is disposed on the substrate and located in the recess.

In some embodiments, the electrodes includes a first electrode and a second electrode, the recess is located between the first electrode and the second electrode, and the recess penetrates through an end face, along a thickness direction of the battery cell, of the battery cell; or the recess is located at a side, along the thickness direction of the battery cell, of the electrodes, and the recess is formed by recessing at least part of a side edge of the end face along the thickness direction; or two recesses are disposed, and the two recesses are respectively located at two ends of the end face along a width direction of the battery cell, and the first electrode and the second electrode are both located between the two recesses.

In some other embodiments, the electrodes include a first electrode and a second electrode, a plurality of recesses are disposed, and at least one of the first electrode and the second electrode is disposed in the recess.

Optionally, at least part of the structure of the protective plate module is located in the recess where the electrodes are not disposed.

Optionally, at least part of a structure of the insulating spacer is located in the recess.

In some embodiments, the protective plate module further includes a power connection terminal, and the power connection terminal is configured to connect to an external line.

Optionally, the battery further includes an injection molding part, the injection molding part is disposed at an electrode end of the case, the injection molding part encapsulates the protective plate module, and the power connection terminal extends to an outside of the injection molding part.

Optionally, the injection molding part is adapted to fill a gap between the protective plate module and the recess.

Optionally, a width of the injection molding part is less than or equal to a width of the case.

Optionally, the battery further includes: an electrode adapter plate, where the electrode adapter plate is respectively connected to the tabs and the electrodes.

In a specific example, the case is a metal part, and/or the insulating spacer is a polyester resin part.

In some embodiments, the protective plate module includes a protective part with a detection end, and the protective part is installed on an end face of one end of the case in a manner that the detection end points to the bare cell.

Optionally, the tabs include a first electrode tab and a second electrode tab.

In a specific example, a size of the recess in a direction from the first electrode tab to the second electrode tab ranges from 3 mm to 20 mm, and/or a size of the recess in a length extension direction of the first electrode tab ranges from 2 mm to 5 mm.

Optionally, the protective part includes a first connection end and a second connection end, the first connection end is connected to the first electrode tab, and the second connection end is connected to a circuit board assembly.

Optionally, the battery cell includes a first connection portion disposed outside the case, the first electrode tab is electrically connected to the first connection portion, and the first electrode tab is electrically connected to the first connection end through the first connection portion.

Optionally, the battery cell includes a first metal plate connecting the protective part and the first connection portion, the first metal plate includes a first flat plate portion and a second flat plate portion which are distributed in a stepped manner, and the first flat plate portion is located between the second flat plate portion and a body; and the first flat plate portion is connected to the protective part, and the second flat plate portion is connected to the first connection portion.

Optionally, the battery cell includes a second metal plate connecting the protective part and the circuit board assembly, the second metal plate includes a first connection tab connected to the second connection end and a sheet-like body, and an end, away from the second connection end, of the sheet-like body is connected to the circuit board assembly.

Optionally, an end, away from the second connection end, of the sheet-shaped body includes a second connection tab, and the sheet-shaped body is connected to the circuit board assembly through the second connection tab.

Optionally, the battery further includes: a circuit board assembly, where the battery cell includes at least two battery cells, and the at least two battery cells are symmetrically distributed along the circuit board assembly.

Optionally, the circuit board assembly includes a control circuit and a circuit board carrying the control circuit, and the at least two battery cells are distributed on two sides of the circuit board assembly.

Optionally, the battery includes an insulation fastening unit enclosing the battery cell and the circuit board assembly.

Optionally, the insulation fastening unit includes an insulation film, the insulation film includes an insulation film base material layer, and the insulation film base material layer is bonded to the battery cell and/or the circuit board assembly through an insulation film adhesive layer.

Optionally, the insulation film includes an insulation film heat-conductive layer enclosing the insulation film base material layer, the insulation film includes a plurality of insulation film adhesive layers, and one layer of the plurality of insulation film adhesive layers is distributed between the insulation film heat-conductive layer and the insulation film base material layer.

Optionally, the insulation fastening unit further includes an adhesive-fixed bracket disposed between an insulation film and the circuit board assembly and/or the battery cell.

A second aspect of the present disclosure further provides an electronic device, includes: a device body, where the device body has a battery accommodating compartment; the battery according to the first aspect of the present disclosure, where the battery is disposed in the battery accommodating compartment and is electrically connected to the device body.

According to the electronic device of the present disclosure, by disposing the battery in the first aspect, a volume of the accommodating compartment may be saved, the space utilization rate may be improved, and a miniaturization of the electronic device may be facilitated.

### BRIEF DESCRIPTION OF THE DRAWINGS

In order to more clearly illustrate embodiments of the present disclosure or technical solutions in the prior art, the following briefly describes the accompanying drawings required in the description of the embodiments or the prior art. Obviously, the accompanying drawings in the following description are some embodiments of the present disclosure, and for those of ordinary skill in the art, other drawings may be obtained according to these drawings without creative efforts. Where:
FIG. 1 is an exploded view of a battery according to an embodiment of the present disclosure.
FIG. 2 is a schematic structural diagram of a part of a battery cell according to an embodiment of the present disclosure.
FIG. 3 is a schematic cross-sectional view of a battery corresponding to a battery cell shown in FIG. 2.
FIG. 4 is a schematic structural diagram of a part of a battery cell according to another embodiment of the present disclosure.
FIG. 5 is a schematic cross-sectional view of a battery corresponding to a battery cell shown in FIG. 4.
FIG. 6 is a schematic structural diagram of a battery corresponding to a battery cell in FIG. 4 at an angle.
FIG. 7 is a schematic structural diagram of a battery corresponding to a battery cell in FIG. 4 at another angle.
FIG. 8 is a schematic structural diagram of a part of a battery corresponding to a battery cell shown in FIG. 4.
FIG. 9 is a schematic structural diagram of a part of a battery cell according to another embodiment of the present disclosure.
FIG. 10 is a schematic cross-sectional view of a battery corresponding to a battery cell shown in FIG. 9.
FIG. 11 is a schematic structural diagram of a part of a battery cell according to another embodiment of the present disclosure.
FIG. 12 is a schematic cross-sectional view of a battery corresponding to a battery cell shown in FIG. 11.
FIG. 13 is a schematic structural diagram of a battery according to another embodiment of the present disclosure.
FIG. 14 is a schematic structural diagram of a core unit of a battery shown in FIG. 13.
FIG. 15 is a schematic structural diagram of a part of components of a battery shown in FIG. 13.
FIG. 16 is a schematic partial cross-sectional view of a battery shown in FIG. 13.
FIG. 17 is a schematic enlarged view of a second metal plate shown in FIG. 15.
FIG. 18 is a schematic enlarged view of a first metal plate shown in FIG. 15.
FIG. 19 is a schematic partial cross-sectional view of a battery shown in FIG. 13.
FIG. 20 is a schematic cross-sectional view of an insulation film of a battery shown in FIG. 13.
FIG. 21 is a schematic cross-sectional view of a deformation example of an insulation film of a battery shown in FIG. 13.

### DETAILED DESCRIPTION OF THE EMBODIMENTS

The following describes embodiments of the present disclosure in detail, and examples of the embodiments are shown in the accompanying drawings, where the same or similar reference numerals refer to the same or similar elements or elements with the same or similar functions throughout. The embodiments described below with reference to the drawings are exemplary and are merely used for explaining the present disclosure, but cannot be understood as limiting the present disclosure.

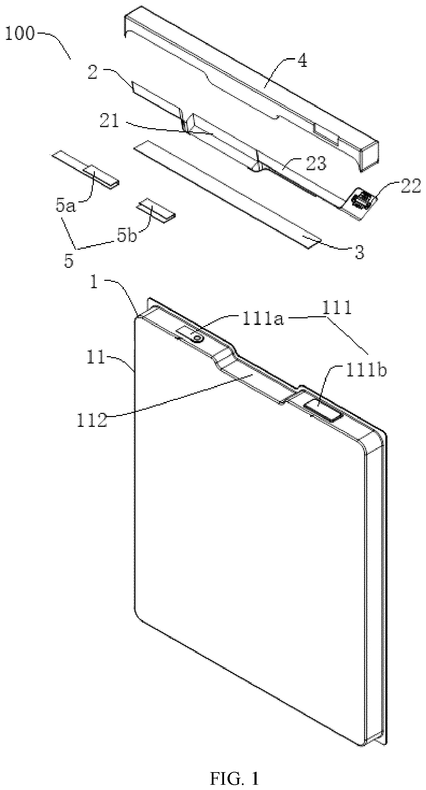

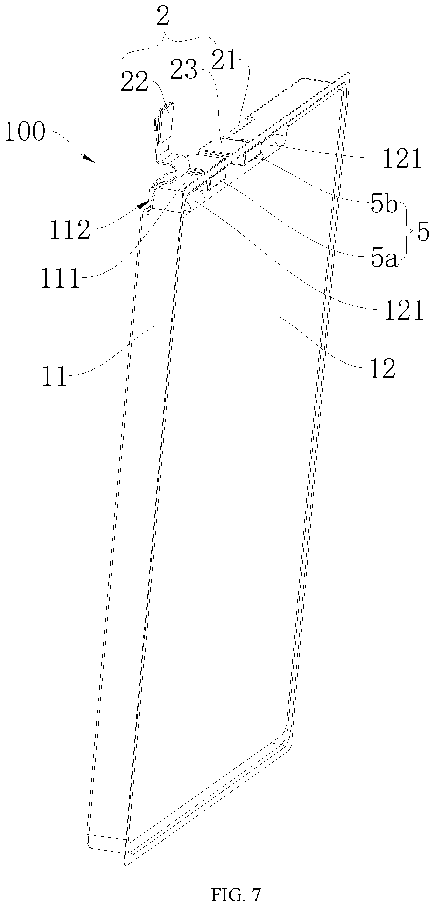

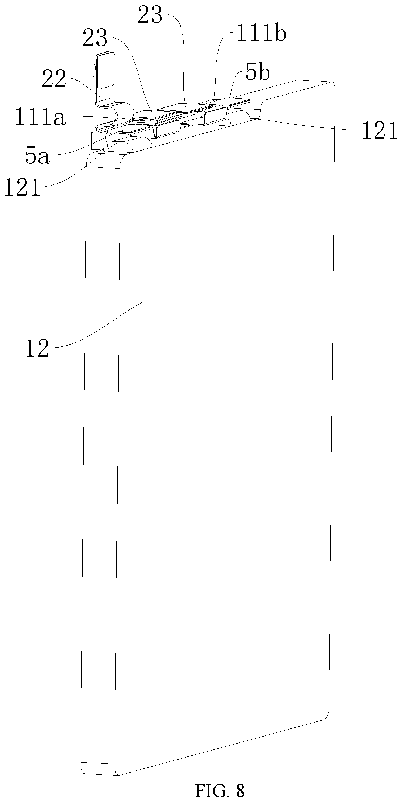

A battery 100 according to an embodiment of the present disclosure is described below with reference to FIG. 1 to FIG. 12.

Referring to FIG. 1 and FIG. 6 to FIG. 8, the battery 100 according to an embodiment of the present disclosure includes a battery cell 1, a protective plate module 2 and an insulating spacer 3.

Specifically, the battery cell 1 may include a bare cell 12 and a case 11. The bare cell 12 is provided with tabs 121, the case 11 encloses the bare cell 12, so that the case 11 may provide protection for the bare cell 12, thereby improving a security of the battery. An electrode end of the case 11 is provided with a recess 112 and electrodes 111, the electrodes 111 and the tabs 121 are electrically connected inside the case 11, and the tabs 121 may include a first electrode tab (for example, a positive tab 121) and a second electrode tab (for example, a negative tab 121). For example, the recess 112 may be recessed inward along a length direction of the battery cell 1. The electrodes 111 may be disposed in the recess 112, or also may be disposed outside the recess 112 and separated from the recess 112.

At least part of a structure of the protective plate module 2 is matched with the recess 112, and the protective plate module 2 is electrically connected to the electrodes 111. It should be understood that the protective plate module 2 and the electrodes 111 are electrically connected on an outside of the case 11. The protective plate module 2 may provide protection during a charging and discharging process of the battery cell 1, to avoid problems such as overcharge, over-discharge, overcurrent, short circuit and extremely high-temperature charging and discharging. For example, a protruding part of the protective plate module 2 may be disposed in the recess 112, or the protective plate module 2 also may be integrally embedded in the recess 112. The insulating spacer 3 is disposed between the battery cell 1 and the protective plate module 2, so as to separate the battery cell 1 and the protective plate module 2, thereby avoiding the short circuit between the protective plate module 2 and the battery cell 1.

According to the battery 100 of the embodiment of the present disclosure, the recess 112 is disposed on an end face of the electrode end of the battery cell 1, and at least part of the protective plate module 2 is disposed in the recess 112, so that the space utilization rate may be improved, an overall length of the battery 100 may be shortened, and an energy density of the battery is greater at a same size.

According to some embodiments of the present disclosure, the recess 112 and the electrodes 111 are staggered in a horizontal direction. The protective plate module 2 may include a module body 21 and an electrode connection plate 23, and the module body 21 is located in the recess 112 to fully utilize a space of the recess 112. One end of the electrode connection plate 23 is connected to the module body 21, and the other end of the electrode connection plate 23 extends to an upper side of the electrodes 111 and is electrically connected to the electrodes 111. In this way, it can be avoided that a length of the battery 100 becomes longer when the protective plate module 2 is integrally disposed on a side, facing away from the battery cell 1, of the electrodes 111. If the length of the battery 100 becomes longer, it is not beneficial to reduce a size of a space occupied by the battery 100 and improve the energy density.

Furthermore, the module body 21 may include a substrate (not shown in Fig) and an electronic component (not shown in Fig). The electronic component is disposed on a side, facing the battery cell 1, of the substrate, and the electronic component protrudes relative to the substrate, that is, the electronic component forms the protruding part of the protective plate module 2. When the protective plate module 2 is assembled with the battery cell 1, the electronic component may be embedded in the recess 112 of the battery cell 1, or the protective plate module 2 also may be integrally embedded in the recess 112. In this way, a space of the recess 112 may be fully utilized, the structural layout of the battery 100 helps to be optimized, the space utilization rate is improved, and the length of the battery 100 is shortened.

In some embodiments, the electrodes 111 may include a first electrode 111a and a second electrode 111b, the first electrode 111a and the second electrode 111b are disposed at intervals along a width direction of the battery cell 1, and the first electrode 111a and the second electrode 111b are separated from the recess 112. In this way, when the electronic component of the protective plate module 2 is disposed in the recess 112 of the battery cell 1, the problems such as the mutual interference or the short circuit caused by accidental contact of the electrode 111 and the electronic device may be further avoided.

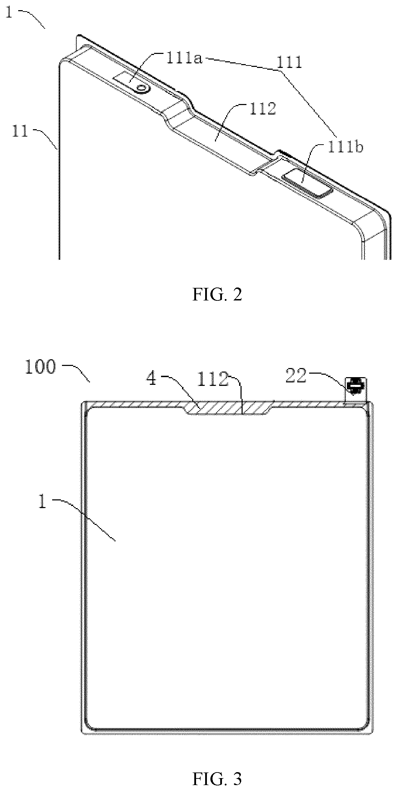

Optionally, referring to FIG. 2 and FIG. 3, the recess 112 is located between the first electrode 111a and the second electrode 111b, and the recess 112 penetrates through an end face, along a thickness direction of the battery cell 1, of the battery cell 1. In other words, the first electrode 111a, the recess 112 and the second electrode 111b of the battery cell 1 which are sequentially arranged at intervals along the width direction of the battery cell 1. At this time, a substrate of the protective plate module 2 may be disposed on an outside of the recess 112, to facilitate connection with the first electrode 111a and the second electrode 111b, and the electronic component is disposed in the recess 112, to reduce a length of the battery 100 and reduce a volume of the battery 100.

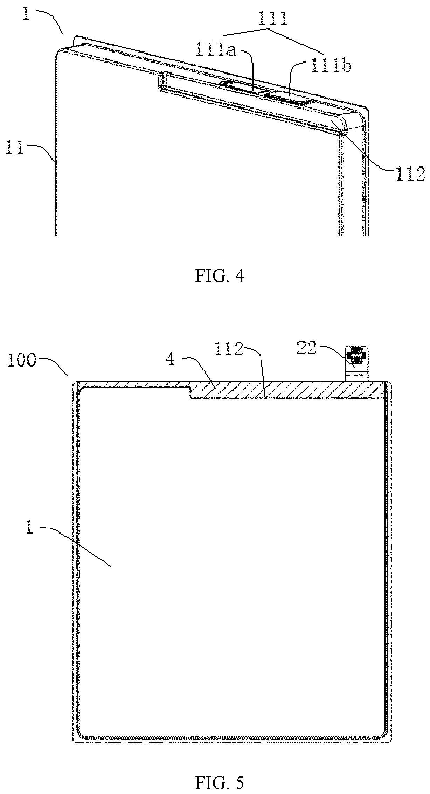

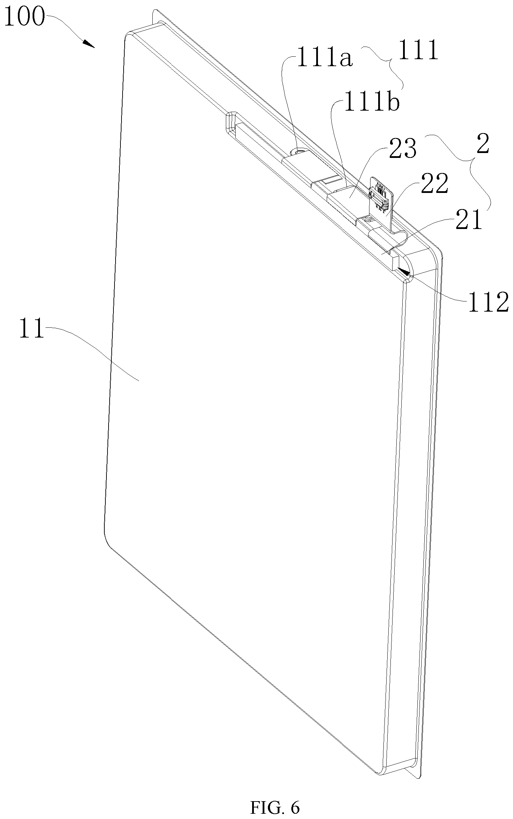

Optionally, referring to FIG. 4 and FIG. 5 to FIG. 8 or FIG. 9 and FIG. 10, the recess 112 and the electrodes 111 are disposed at intervals in a thickness direction of the battery cell 1, and the recess 112 is formed by recessing at least part of a side edge of the end face of the battery cell 1 along the thickness direction. For example, as shown in FIG. 6, the recess 112 may completely penetrate through the end face along the side edge of the end face of the battery cell 1 in the thickness direction, or, for example, as shown in FIG. 4, the recess 112 may also be formed by recessing only a part of the side edge of the end face of the battery cell 1 inward along the thickness direction. Of course, a length of the recess 112 may be reasonably determined according to the number and position of the electronic component on the protective plate module 2, so that a structure is simple and easy to manufacture.

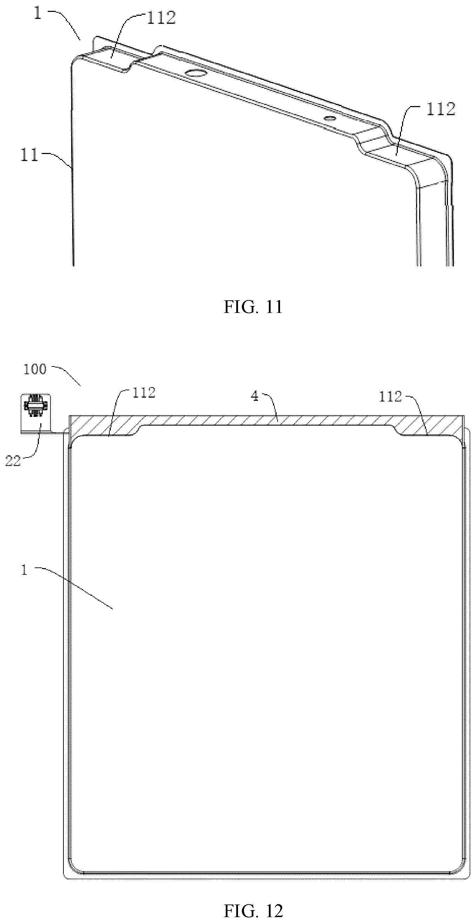

Optionally, referring to FIG. 11 and FIG. 12, two recesses 112 may also be disposed, the two recesses 112 are respectively located at two ends of the end face, along a width direction, of the battery cell 1, and the first electrode 111a and the second electrode 111b are both located between the two recesses 112. At this time, the electronic components of the protective plate module 2 may be disposed at corresponding positions on the substrate, so that the electronic components are respectively located in the two recesses 112.

In some other embodiments, the electrodes 111 may include a first electrode 111a and a second electrode 111b, a plurality of recesses 112 may be disposed, and at least one of the first electrode 111a and the second electrode 111b is disposed in the recess 112, and at least part of structure of the protective plate module 2 is located in the recess 112 where the electrodes 111 are not disposed. For example, the first electrode 111a may be located in the recess 112 and the second electrode 111b may be disposed outside the recess 112, or the second electrode 111b may be disposed in the recess 112 and the first electrode 111a may be disposed outside the recess 112, or the first electrode 111a and the second electrode 111b may be respectively disposed in different recesses 112. The electronic component of the protective plate module 2 may be disposed in the recess 112 where the electrodes 111 are not disposed, so that a structural form of the battery 100 is diversified, and the overall structure is simple and easy to manufacture.

In a specific example, the case 11 is a metal part. For example, the case 11 may be a steel shell, or may be an aluminum alloy shell. In this way, the case 11 has a higher structural strength, which may better protect an internal bare cell 12. It should be noted that, the case in the embodiment may effectively improve a strength of the battery and a puncture resistance of sharp object, thereby ensuring that the battery may still be protected enough under extreme conditions, and greatly reducing potential safety hazards. In addition, the battery of the present disclosure solves a problem of insufficient protection of the existing batterie. Compared to the existing soft-Pack technologies, the present disclosure has a stronger technical advantage in a structural strength and a protective performance.

In a specific example, a thickness of the case 11 ranges from 0.05 mm to 0.15 mm.

In another specific example, tensile modulus of an alloy steel used for the case 11 may reach 193 Gpa, and/or a tensile strength of the alloy steel may reach 580 Gpa. The case 11 with this performance has good elasticity and impact resistance. Compared to a conventional aluminum-plastic film packaged case, the case 11 of the present disclosure has better elasticity, toughness and higher mechanical strength, so that the case is not damaged when bearing a large external force.

In a specific example, an insulating spacer 3 is a polyester resin part, so that the accidental contact and the short circuit between the protective plate module 2 and the battery cell 1 may be better prevented.

In some embodiments, referring to FIG. 1, FIG. 3, FIG. 5 to FIG. 8, FIG. 10 and FIG. 12, the protective plate module 2 may further include a power connection terminal 22, the power connection terminal 22 is configured to connect to an external line, one end of the power connection terminal 22 may be connected to the module body 21, and the other end of the power connection terminal 22 may extend to a direction away from the battery cell 1. Optionally, the power connection terminal 22 may extend along a straight line, a folded line or a curve to ensure that the power connection terminal 22 does not occupy too much space while having a sufficient connection length.

Optionally, the battery 100 may further include an injection molding part 4. The injection molding part 4 encapsulates an end of the battery cell 1 which is provided with the protective plate module 2, and encloses a part of the protective plate module 2 except for the power connection terminal 22, and the power connection terminal 22 extends to an outside of the injection molding part 4 to connect to an external line. For example, the injection molding part 4 may be formed by injecting an injection molding material at an end of the battery cell 1 where the protective plate module 2 is located. At this time, the injection molding part 4 may encapsulate an end of the battery cell 1 where the protection plate module 22 is located, so as to better protect the electrodes 111 and the protective plate module 2. Simultaneously, the power connection terminal 22 is exposed to facilitate the power connection terminal 22 to transmit current outward.

Optionally, the injection molding part 4 may also fill a gap between the protective plate module 2 and the recess 112. In this way, the protective plate module 2 may be better fixed to the recess 112 of the battery cell 1, thereby improving an operational reliability of the battery 100.

Optionally, a width of the injection molding part 4 is less than or equal to a width of the case 11, so that an overall space occupation of the battery 100 may be reduced while the protective plate module 2 is fixed.

According to some embodiments of the present disclosure, as shown in FIG. 1, the battery 100 may further include an electrode adapter plate 5. The electrode adapter plate 5 is disposed on an inner side of the case 11, and the electrode adapter plate 5 is respectively connected to the tabs 121 of the bare cell 12 and the electrodes 111 of the case 11. For example, in order to reduce a length of the case 11 and further reduce the overall space occupation of the battery 100, the electrodes 111 and the tabs 121 may be staggered in a horizontal direction, at this time, the electrode adapter plate 5 may be used to connect the staggered electrodes 111 and tabs 121. For example, the electrode adapter plate 5 includes a first electrode adapter plate 5a and a second electrode adapter plate 5b, one end of the first electrode adapter plate 5a may be connected to an end, away from the bare cell 12, of the first electrode tab 121 (for example, a positive tab 121), and the other end of the first electrode adapter plate 5a may be connected to an end, facing the bare cell 12, of the first electrode. One end of the second electrode adapter plate 5b may be connected to an end, away from the bare cell 12, of the second electrode tab 121 (for example, a negative tab 121), and the other end of the second electrode adapter plate 5b may be connected to an end, facing the bare cell 12, of the second electrode. In this way, the battery cell 1 is connected to the protective plate module 2 through the first electrode adapter plate 5a and the second electrode adapter plate 5b, thereby forming a complete circuit. Simultaneously, the overall space occupation of the battery 100 may be smaller.

The following illustrates examples of the battery 100 in embodiment with reference to FIG. 1 to FIG. 12.

### Embodiment 1

As shown in FIG. 1 to FIG. 3, a battery 100 of the embodiment includes a battery cell 1, a protective plate module 2, an insulating spacer 3, an injection molding part 4 and an electrode adapter plate 5.

The battery cell 1 includes a bare cell 12 and a case 11, and the bare cell 12 is provided with tabs 121. The case 11 is a steel case and encloses the bare cell 12. A recess 112 and electrodes 111 are disposed at an end of the case 11 in a length direction. The electrodes 111 and the tabs 121 are electrically connected inside the case 11. The electrodes 111 include a first electrode 111a and a second electrode 111b, the first electrode 111a and the second electrode 111b are disposed at intervals along a width direction of the battery cell 1, the recess 112 is located between the first electrode 111a and the second electrode 1 11b, the recess 112 is formed by recessing inward from an end face of the case 11, and the recess 112 penetrates through an end face, along a thickness direction of the battery cell 1, of the battery cell 1.

The protective plate module 2 includes a module body 21, an electrode connection plate 23 and a power connection terminal 22. The module body 21 is located in the recess 112 to fully utilize a space of the recess 112, one end of the electrode connection plate 23 is connected to the module body 21, and the other end of the electrode connection plate 23 extends to an upper side of the electrodes 111 and is electrically connected to the electrodes 111. The protective plate module 2 and the battery cell 1 are separated by the insulating spacer 3, and the protective plate module 2 and the electrodes 111 of the battery cell 1 are electrically connected through the electrode adapter plate 5.

The injection molding part 4 encapsulates an end of the battery cell 1 which is provided with the electrodes 111, and encloses a part of the protective plate module 2 except for the power connection terminal 22, and the power connection terminal 22 extends to an outside of the injection molding part 4 to transmit current outward.

### Embodiment 2

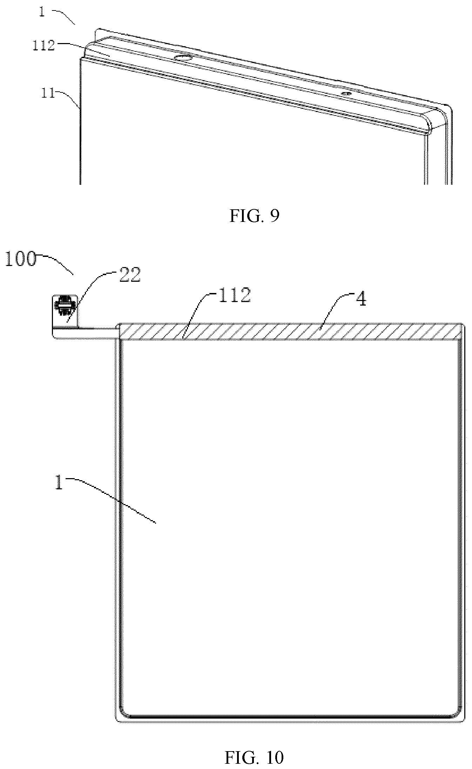

As shown in FIG. 9 and FIG. 10, a battery 100 of the embodiment includes a battery cell 1, a protective plate module 2, an insulating spacer 3, an injection molding part 4 and an electrode adapter plate 5.

The battery cell 1 includes a bare cell 12 and a case 11, and the bare cell 12 is provided with tabs 121. The case 11 is a steel case and encloses the bare cell 12. A recess 112 and the electrodes 111 are disposed at an electrode end of the case 11. The electrodes 111 and the tabs 121 are electrically connected inside the case 11. The electrodes 111 include a first electrode 111a and a second electrode 111b, the first electrode 111a and the second electrode 111b are disposed at intervals along a width direction of the battery cell 1, and the recess 112 and the electrodes 111 are disposed at intervals along a thickness direction of the battery cell 1. Simultaneously, the recess 112 completely penetrates through an end face, along a width direction of the battery cell 1, of the battery cell 1.

The protective plate module 2 includes a module body 21, an electrode connection plate 23 and a power connection terminal 22. The module body 21 is located in the recess 112 to fully utilize a space of the recess 112, one end of the electrode connection plate 23 is connected to the module body 21, and the other end of the electrode connection plate 23 extends to an upper side of the electrodes 111 and is electrically connected to the electrodes 111. The protective plate module 2 and the battery cell 1 are separated by the insulating spacer 3, and the protective plate module 2 and the electrodes 111 of the battery cell 1 are electrically connected through the electrode adapter plate 5.

The injection molding part 4 encapsulates an end of the battery cell 1 which is provided with the electrodes 111, and encloses a part of the protective plate module 2 except for the power connection terminal 22, and the power connection terminal 22 extends to an outside of the injection molding part 4 to transmit current outward.

### Embodiment 3

As shown in FIG. 4 to FIG. 8, a battery 100 of the embodiment includes a battery cell 1, a protective plate module 2, an insulating spacer 3, an injection molding part 4 and an electrode adapter plate 5.

The battery cell 1 includes a bare cell 12 and a case 11, and the bare cell 12 is provided with tabs 121. The case 11 is a steel case and encloses the bare cell 12. A recess 112 and electrodes 111 are disposed at an electrode end of the case 11. The electrodes 111 and the tabs 121 are electrically connected inside the case 11. The electrodes 111 include a first electrode 111a and a second electrode 111b, and the first electrode 111a and the second electrode 111b are disposed at intervals along a width direction of the battery cell 1. The recess 112 and the electrodes 111 are disposed at intervals along a thickness direction of the battery cell 1, and the recess 112 may also be formed by recessing only a part of a side edge of the end face of the battery cell 1 inward along the thickness direction.

The protective plate module 2 includes a module body 21, an electrode connection plate 23 and a power connection terminal 22. The module body 21 is located in the recess 112 to fully utilize a space of the recess 112, one end of the electrode connection plate 23 is connected to the module body 21, and the other end of the electrode connection plate 23 extends to an upper side of the electrodes 111 and is electrically connected to the electrodes 111. The protective plate module 2 and the battery cell 1 are separated by the insulating spacer 3, and the protective plate module 2 and the electrodes 111 of the battery cell 1 are electrically connected through the electrode adapter plate 5.

The injection molding part 4 encapsulates an end of the battery cell 1 which is provided with the electrodes 111, and encloses a part of the protective plate module 2 except for the power connection terminal 22, and the power connection terminal 22 extends to an outside of the injection molding part 4 to transmit current outward.

### Embodiment 4

As shown in FIG. 11 and FIG. 12, a battery 100 of the embodiment includes a battery cell 1, a protective plate module 2, an insulating spacer 3, an injection molding part 4 and an electrode adapter plate 5.

The battery cell 1 includes a bare cell 12 and a case 11, and the bare cell 12 is provided with tabs 121. The case 11 is a steel case and encloses the bare cell 12. A recess 112 and electrodes 111 are both disposed at an electrode end of the case 11. The electrodes 111 and the tabs 121 are electrically connected inside the case 11. The electrodes 111 include a first electrode 111a and a second electrode 111b, and the first electrode 111a and the second electrode 111b are disposed at intervals along a width direction of the battery cell 1. Two recesses 112 are disposed, and the two recesses are respectively located at two ends of an end face along the width direction of the battery cell 1, and the first electrode 111a and the second electrode 111b are both located between the two recesses 112.

The protective plate module 2 includes a module body 21, an electrode connection plate 23 and a power connection terminal 22. The module body 21 is located in the recess 112 to fully utilize a space of the recess 112, one end of the electrode connection plate 23 is connected to the module body 21, and the other end of the electrode connection plate 23 extends to an upper side of the electrodes 111 and is electrically connected to the electrodes 111. The protective plate module 2 and the battery cell 1 are separated by the insulating spacer 3, and the protective plate module 2 and the electrodes 111 of the battery cell 1 are electrically connected through the electrode adapter plate 5.

The injection molding part 4 encapsulates an end of the battery cell 1 which is provided with the electrodes 111, and encloses a part of the protective plate module 2 except for the power connection terminal 22, and the power connection terminal 22 extends to an outside of the injection molding part 4 to transmit current outward.

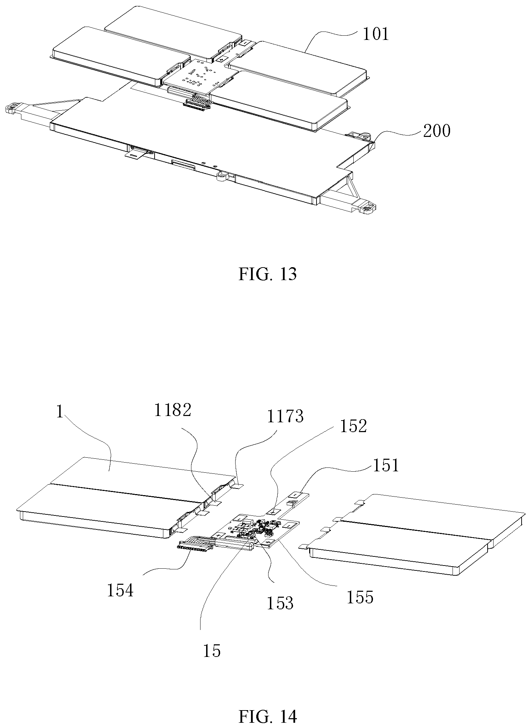

According to some other embodiments of the present disclosure, as shown in FIG. 13 to FIG. 15, a battery may include at least two battery cells 1, the battery cells 1 include a bare cell 12 and a case 11 enclosing a periphery of the bare cell 12. The battery may further include a protective plate module corresponding to each the battery cell, the protective plate module may include a protective part 114 installed on an end face of one end of the case 11, the protective part 114 has a detection end 1141, and the detection end 1141 points to the bare cell 12. Here, the battery cell 1 is used to store electrical energy. The number of the battery cells 1 is determined according to a nominal voltage and a current required by the battery. In the present disclosure, the protective part is installed on the end face of one end of the battery cell, and the detection end points to the bare cell. Since the detection end directly points to the bare cell, a heating condition of the battery cell may be directly detected, thereby increasing a detection precision, improving a reliability and security of product operation, and reducing a risk.

In an embodiment, the battery includes a circuit board assembly 15 for controlling a charging and discharging of the battery cell 1. The circuit board assembly 15 includes a connector 154 that simultaneously connects a plurality of the battery cell 1. The circuit board assembly 15 is used for controlling the charging and discharging of the battery cell 1, and the connector 154 is used to connect an external port to charge and discharge for the battery.

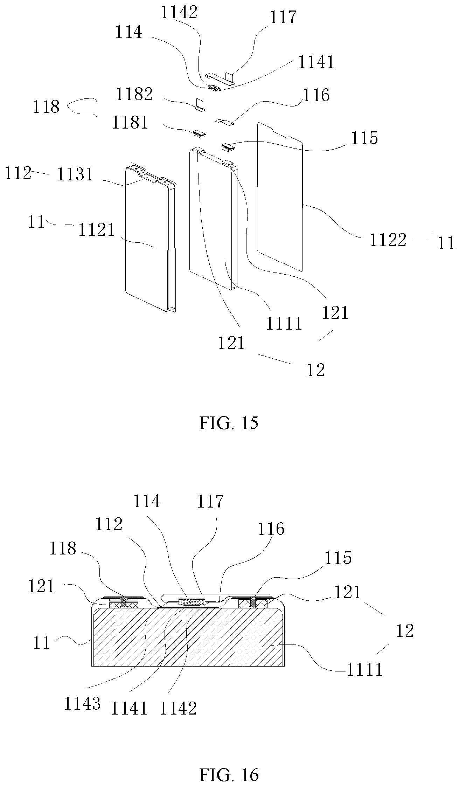

In another embodiment, as shown in FIG. 15, the case 11 includes a bottom case 1121 with an opening cavity and a cover plate 1122 that covers an opening of the bottom case 1121, and the bare cell 12 is accommodated in a space defined by the bottom case 1121 and the cover plate 1122. In this way, the case 11 may provide sealing and protection for the positive electrode plate, the negative electrode plate and an electrolyte of the bare cell 12. Simultaneously, the case 11 has a puncture resistance, may also save a space occupied by the battery, and especially improves a volume ratio of the battery cell 1.

The bare cell 12 may be formed by winding or stacking electrode plates, the electrode plates include a positive electrode plate, a negative electrode plate and a separator, and the separator is disposed between the positive electrode plate and the negative electrode plate to prevent the positive electrode plate and the negative electrode plate from being directly communicated. The bare cell 12 may be combined by winding or stacking the positive electrode plate and the negative electrode plate to achieve chemical storage.

As shown in FIG. 13 and FIG. 14, the circuit board assembly 15 includes a circuit board 155 and a control circuit 153 disposed on the circuit board 155, and the circuit board assembly 15 further includes a first nickel brick 151 and a second nickel brick 152 which are used in pairs. One of the first nickel brick 151 or the second nickel brick 152 is used to connect a negative electrode of the battery cell 1, and the other one of the first nickel brick 151 or the second nickel brick 152 is used to connect a positive electrode of the battery cell 1.

In an embodiment, as shown in FIG. 13 and FIG. 14, the battery includes a plurality of the battery cells 1, each of the battery cells 1 has a first electrode tab 121 and a second electrode tab 121. The circuit board 155 is provided with the first nickel brick 151 and the second nickel brick 152, both of which correspond to the number of the battery cell 1. Each of the first electrode tabs 121 is connected to a corresponding first nickel brick 151, and each of the second electrode tabs 121 is connected to a corresponding second nickel brick 152. One of the first electrode tab 121 and the second electrode tab 121 is the positive electrode, and the other one of the first electrode tab 121 and the second electrode tab 121 is the negative electrode.

In another embodiment, as shown in FIG. 15 to FIG. 16, the bare cell 12 includes a body 1111 and a first electrode tab 121 and a second electrode tab 121 extending outward from one end of the body 1111. The case 11 is recessed toward the body 1111 between the first electrode tab 121 and the second electrode tab 121 to form a recess 112, and the protective part 114 is disposed in the recess 112 in a manner that the detection end 1141 points to the body 1111. In this way, the detection end 1141 directly points to the body 1111, so that a heating condition of the body 1111 may be directly detected, thereby improving a detection precision.

Specifically, the recess 112 includes a bottom wall 1131 extending from the first electrode tab 121 to the second electrode tab 121, and the protective part is disposed in the recess 112 in a manner that the detection end 1141 points to the bottom wall 1131. The purpose that the detection end 1141 points to the body 1111 is achieved by pointing the detection end 1141 to the bottom wall 1131. In this way, the protective part is disposed, a gap between the first electrode tab 121 and the second electrode tab 121 is fully utilized, so that an occupied space of the battery cell 1 may be saved, and a volume ratio of the battery cell 1 may be improved. Since the detection end 1141 points to the bottom wall 1131, the detection end 1141 may be tightly attached to the case 11 of the battery cell 1, which helps to increase the detection precision. For specific settings, refer to FIG. 15 and FIG. 16.

In the present disclosure, it should be further noted that the first electrode tab 121 and the second electrode tab 121 are led out of different electrode plates in the bare cell 12. If the bare cell 12 is in a winding manner, the first electrode tab 121 and the second electrode tab 121 are both single-layers, and if the bare cell 12 is in a stacked manner, the first electrode tab 121 and the second electrode tab 121 are both multi-layer bonding bodies.

In the present disclosure, the protective part includes a Thermal Cut-Off (TCO). The TCO refers to a temperature change switch protector Thermal Cut-Off, which is an overcurrent protection device. When the battery is working abnormally, such as overcharging, when a temperature is higher than a set temperature, the TCO cuts off a charging circuit, so that the battery may not continue to charge, thereby ensuring that the battery is in a safe state.

In another embodiment, a size of the recess 112 in a direction from the first electrode tab 121 to the second electrode tab 121 ranges from 3 mm to 20 mm, and the direction is generally a width direction of the battery cell 1.

In another embodiment, a size of the recess 112 in a length extension direction of the first electrode tab 121 ranges from 2 mm to 5 mm, and the length extension direction of the first electrode tab 121 is generally a length direction of the battery cell 1.

Specifically, the recess 112 may be provided as a through groove with openings in a thickness direction of the battery cell 1. As shown in FIG. 15 and FIG. 16, that is, a bottom wall end of the bottom case 1121 is provided with a first notch, the cover plate 1122 is provided with a second notch corresponding to the first notch, and the recess 112 is recessed from a side wall of the bottom case 1121 to an interior of the case 11 to abut against each side of the first notch and the second notch. The side wall of the bottom case 1121 and the bottom wall of the bottom case 1121 may be integrally formed, and welding may be performed locally, for example, the welding may be applied at a position where the side wall of the bottom case 1121 is recessed towards the interior of the case 11 until it abuts against the first notch. The side wall and the bottom wall of the bottom case 1121 may also be of a separate structure, and then are formed by the welding.

In another embodiment, as shown in FIG. 15, the protective part 114 includes a first connection terminal 1142 and a second connection terminal 1143, the first connection terminal 1142 is close to the first electrode tab 121, the second connection terminal 1143 is away from the first electrode tab 121, the first connection terminal 1142 is connected to the first electrode tab 121, and the second connection terminal 1143 is connected to the circuit board assembly 15. In this way, the protective part 114 is connected in series between the first electrode tab 121 and the circuit board assembly 15, so that when an overcurrent occurs, the protective part 114 cuts off a connection between the first electrode tab 121 and the circuit board assembly 15, which means that a charging circuit is cut off, so that the battery may not continue to charged, thereby ensuring that the battery is in the safe state.

In another embodiment, as shown in FIG. 15 and FIG. 16, the battery cell 1 includes a first connection portion 115 disposed outside the case 11, the first electrode tab 121 is electrically connected to the first connection portion 115, an insulating spacer is disposed between the first electrode tab 121 and the case 11, so that the first electrode tab 121 is insulated from the case 11, and the first electrode tab 121 is electrically connected to the first connection terminal 1142 through the first connection portion 115. The first connection portion 115 is a conductor, and the first connection portion 115 is a connection medium between the bare cell 12 and an external environment. The insulating spacer is disposed at a connection between the first connection portion 115 and the case 11, so that the case 11 is insulated from an internal electrode plate of the battery cell 1.

In another embodiment, as shown in FIG. 15, FIG. 16, and FIG. 18, the battery cell 1 includes a first metal plate 116 that connects the protective part 114 and the first connection portion 115, the first metal plate 116 is used to conduct current, and a common metal is nickel, copper, aluminum, etc.

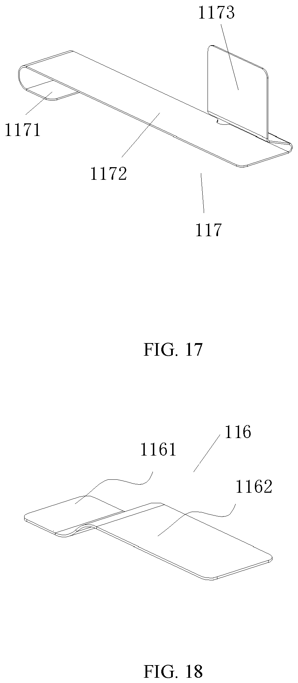

In another embodiment, as shown in FIG. 17, the first metal plate 116 includes a first flat plate portion 1161 and a second flat plate portion 1162 distributed in a stepped manner. In an assembled state, in a length extension direction of the first electrode tab 121, the first flat plate portion 1161 is located between the second flat plate portion 1162 and the body 1111, the first flat plate portion 1161 is connected to the protective part 114, and the second flat plate portion 1162 is electrically connected to the first electrode tab 121 through connecting the first connection portion 115. Since the protective part 114 is located in the recess 112, the first connection terminal 1142 and the second connection terminal 1143 are also located in the recess 112, and the first flat plate portion 1161 and the second flat plate portion 1162 are distributed in a stepped manner, the first metal plate 116 is more suitable for an installation environment, so that the first metal plate 116 may be reliably connected to the first connection portion 115 and the protective part 114, and the structure is compact.

In another embodiment, as shown in FIG. 15 to FIG. 17, the battery cell 1 includes a second metal plate 117 connected to the protective part 114 and a circuit board assembly 15, and the second metal plate 117 includes a first connection tab 1171 connected to a second connection terminal 1143 and a sheet-shaped body 1172. After the sheet-shaped body 1172 is bent from an end, away from the first connection terminal 1142, of the first connection tab 1171, the sheet-shaped body 1172 extends from a side, away from the detection end 1141, of the protective part 114 to the first connection terminal 1142, and one end, away from the second connection terminal 1143, of the sheet-shaped body 1172 is connected to the circuit board assembly 15. Since the protective part 114 is connected in series between the first electrode tab 121 and the circuit board assembly 15, the protective part 114 is also disposed in the recess 112 located between the first electrode tab 121 and the second electrode tab 121, so that the second metal plate 117 may be disposed in a bent shape to adapt to the foregoing installation environment.

Further, as shown in FIG. 15 and FIG. 17, an end, away from the second connection terminal 1143, of the sheet-shaped body 1172 includes a second connection tab 1173, and the sheet-shaped body 1172 is connected to the circuit board assembly 15 through the second connection tab 1173. The second metal plate 117 is used to conduct current, and is commonly used as a metal such as nickel, copper, and aluminum.

In another embodiment, as shown in FIG. 15 and FIG. 17, the second connection tab 1173 is perpendicular to the sheet-shaped body 1172. The second connection tab 1173 is connected to the first nickel brick 151 in the circuit board assembly 15.

In another embodiment, as shown in FIG. 14 and FIG. 15, the battery cell 1 includes a second connection portion 118 connected to a second electrode tab 121, the second connection portion 118 includes a first conductor 1181 connected to the second electrode tab 121 and a second conductor 1182 connected to the first conductor 1181, and the second conductor 1182 is connected to the circuit board assembly 15.

The first conductor 1181 is the connection medium between the bare cell 12 and the external environment, and the connection medium includes a metal conductor. The first conductor 1181 is connected to the second electrode tab 121 in the case 11, and an insulating material is disposed at a connection point between the first conductor 1181 and the case 11, so that the case 11 is insulated from an internal electrode plate of the bare cell 12. The first conductor 1181 is usually a metal such as nickel, copper or aluminum, etc. As shown in FIG. 14 and FIG. 15, the first conductor 1181 is connected to the second nickel brick 152 in the circuit board assembly 15 through the second conductor 1182.

The second electrode tab 121, the first conductor 1181, the second conductor 1182 and the second nickel brick 152 may be mechanically and electrically connected through a laser welding, a resistance welding or a soldering, to realize functions of energy storage and charging and discharging management of the battery.

In another embodiment, as shown in FIG. 13 and FIG. 14, the battery has the circuit board assembly 15 and an even number of battery cells 1, and the even number of battery cells 1 are symmetrically distributed along the circuit board assembly 15.

Specifically, as shown in FIG. 14, FIG. 15 and FIG. 17, the battery includes four battery cells 1, two of the four battery cells 1 are disposed on a side of the circuit board assembly 15, and the other two battery cells 1 are disposed on the opposite side surface of the circuit board assembly 15.

The circuit board assembly 15 includes a control circuit 153 and a circuit board 155 carrying the control circuit 153, and the battery cell 1 is distributed on two sides of the circuit board assembly 15.

Further, the cover plate 1122 of the case 11 is parallel to the circuit board 155.

As shown in FIG. 14, FIG. 15 and FIG. 17, the circuit board 155 is disposed parallel to the cover plate 1122. In this embodiment, the circuit board 155 is disposed parallel to two opposite planes of the battery cell 1 in a thickness direction. In an assembled state, a second connection tab 1173 is parallel to the circuit board 155 and is welded to the second nickel brick 152 distributed on the circuit board 155; and an end, away from a first conductor 1181, of a second conductor 1182 is also disposed parallel to the circuit board 155 and is welded to the first nickel brick 151 distributed on the circuit board 155. Similarly, the other several battery cells 1 are also connected to the circuit board assembly 15 in this way, so as to form a battery core unit 101 suitable for electronic devices and other devices, to realize the functions of the energy storage and charging and discharging management of the battery.

In another embodiment, as shown in FIG. 13, the battery includes the insulation fastening unit 200 enclosing the circuit board assembly 15 and the battery cell 1, and the insulation fastening unit 200 is used to provide an external installation protection for the battery core unit 101 composed of the circuit board assembly 15 and the battery cell 1.

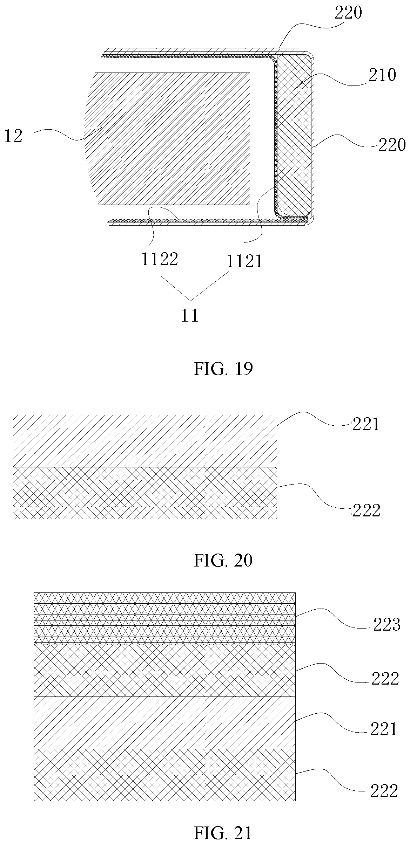

In another embodiment, as shown in FIG. 19 and FIG. 20, the insulating fastening unit 200 includes an insulation film 220, the insulating film 220 includes an insulation film base material layer 221, and the insulation film base material layer 221 is bonded to the battery cell 1 and/or the circuit board assembly 15 through an insulation film adhesive layer 222. The insulating film 220 is mainly used for insulation, printing identification, and the like. The insulation film base material layer 221 may include any one or more of ethylene terephthalate (PET). The insulation film adhesive layer 222 may be formed by coating an insulating adhesive.

In another embodiment, as shown in FIG. 21, the insulation film 220 includes an insulation film heat-conductive layer 223 enclosing the insulation film base material layer 221, and the insulation film 220 includes a plurality of insulation film adhesive layers 222. One layer of the plurality of the insulating film adhesive layers 222 is distributed between the insulation film heat-conductive layer 223 and the insulation film base material layer 221, so that the insulation film heat-conductive layer 223 is fixedly connected to the insulation film base material layer 221. The insulation film heat-conductive layer 223 is used for soaking heat and dissipating heat. That is to say, in addition to a heat dissipation effect of the insulation film heat-conductive layer 223, when the battery is locally heated, the insulation film heat-conductive layer 223 may also conduct a part of heat to other parts of the battery to prevent local overheating, thereby protecting the battery. The insulation film heat-conductive layer 223 may include any one or more of graphite, copper foil, and aluminum foil.

In another embodiment, a thickness of the insulation film heat-conductive layer ranges from 0.03 mm to 0.25 mm.

In another embodiment, the insulation fastening unit 200 further includes an adhesive-fixed bracket 210 disposed between the insulation film 220 and the battery cell 1 and/or the circuit board assembly 15. The adhesive-fixed bracket 210 is used to form a contour of the battery. A specific position and a thickness of the adhesive-fixed bracket 210 depend on the requirements of a shape. That is to say, the adhesive-fixed bracket 210 may completely enclose the case 11, or may partially cover the case 11, may use the same thickness, or may use different thicknesses.

The following describes an electronic device according to an embodiment of the second aspect of the present disclosure.

Specifically, the electronic device in the embodiments of the present disclosure may be an electronic device such as a tablet computer, a mobile phone, etc. Certainly, the electronic device may also be another electronic device requiring a battery function. The electronic device may include a device body and the battery 100 described in the above embodiment, the device body may be provided with a battery accommodation compartment, the battery 100 is disposed in the battery accommodation compartment, and the battery 100 is electrically connected to the device body for supplying power to the device body.

According to the electronic device in the embodiments of the present disclosure, by disposing the battery 100 in the above embodiment, a volume of the battery accommodating compartment may be saved, the space utilization rate may be improved, and a miniaturization of the electronic device may be facilitated.

In the present disclosure, terms such as "installed", "connected", "connection", "fixed" and the like should be understood in a broad sense, for example, maybe a fixed connection, a detachable connection or a whole; maybe a mechanical connection, an electrical connection, or a communication; and maybe a direct connection, or maybe indirectly connected by using an intermediate medium, or maybe an interaction relationship between the communication inside two elements or the two elements. For those of ordinary skill in the art, a specific meaning of the above terms in the present disclosure may be understood according to specific situations.

In a description of the specification, reference to terms such as "an embodiment", "some embodiments", "an example", "a specific example", or "some examples" means specific features, structures, materials or characteristics described in connection with the embodiment or example is included in at least one embodiment or example of the present disclosure. In the specification, a schematic representation of the above terms does not necessarily refer to the same embodiment or example. Furthermore, the specific features, structures, materials, or characteristics described may be combined in any suitable manner in any one or more embodiments or examples. In addition, without contradicting each other, a person skilled in the art may combine and incorporate different embodiments or examples described in the specification and features of different embodiments or examples may be combined and incorporated.

Finally, it should be noted that the above embodiments are only used to illustrate the technical solutions of the present disclosure, rather than to limit them. Although the present disclosure is described in detail with reference to the above embodiments, a person skilled in the art should understand that the technical solutions described in the above embodiments may still be modified, or some or all of the technical features may be equivalently replaced, and these modifications or replacements do not make an essence of the corresponding technical solutions fall within a scope of the technical solutions of the embodiments of the present disclosure.

## Claims

1. A battery, comprising:
a battery cell, wherein the battery cell comprises a bare cell and a case, the battery cell is provided with tabs, the case encloses the bare cell, an electrode end of the case is provided with a recess and electrodes, and the electrodes are electrically connected to the tabs, respectively;
a protective plate module, wherein at least part of a structure of the protective plate module is matched with the recess, and the protective plate module is electrically connected to the electrodes;
an insulating spacer, wherein the insulating spacer is disposed between the battery cell and the protective plate module to separate the battery cell from the protective plate module.

2. The battery according to claim 1, wherein the recess and the electrodes are staggered in a horizontal direction, the protective plate module comprises a module body and an electrode connection plate, the module body is located in the recess, one end of the electrode connection plate is connected to the module body, and the other end of the electrode connection plate extends to an upper side of the electrodes and is electrically connected to the electrodes.

3. The battery according to claim 2, wherein the module body comprises a substrate and an electronic component, and the electronic component is disposed on a side, facing the battery cell, of the substrate and located in the recess.

4. The battery according to claim 2, wherein the electrodes comprise a first electrode and a second electrode, the recess is located between the first electrode and the second electrode, and the recess penetrates through an end face, along a thickness direction of the battery cell, of the battery cell; or,
the recess is located at a side, along the thickness direction of the battery cell, of the electrodes, and the recess is formed by recessing at least part of a side edge of the end face along the thickness direction; or,
two recesses are disposed, and the two recesses are respectively located at two ends of the end face along a width direction of the battery cell, and the first electrode and the second electrode are both located between the two recesses.

5. The battery according to claim 1, wherein the electrodes include a first electrode and a second electrode, a plurality of recesses are disposed, and at least one of the first electrode and the second electrode is disposed in the recess.

6. The battery according to claim 5, wherein at least part of the structure of the protective plate module is located in the recess where the electrodes are not disposed.

7. The battery according to any one of claims 1 to 6, wherein at least part of a structure of the insulating spacer is located in the recess.

8. The battery according to any one of claims 1 to 6, wherein the protective plate module further comprises a power connection terminal, and the power connection terminal is configured to connect to an external line.

9. The battery according to claim 8, wherein the battery further comprises an inj ection molding part, the injection molding part is disposed at an electrode end of the case, the injection molding part encapsulates the protective plate module, and the power connection terminal extends to an outside of the injection molding part.

10. The battery according to claim 9, wherein the injection molding part is adapted to fill a gap between the protective plate module and the recess.

11. The battery according to claim 9, wherein a width of the injection molding part is less than or equal to a width of the case.

12. The battery according to any one of claims 1 to 6, further comprises: an electrode adapter plate, wherein the electrode adapter plate is respectively connected to the tabs and the electrodes.

13. The battery according to any one of claims 1 to 6, wherein the case is a metal part, and/or the insulating spacer is a polyester resin part.

14. The battery according to claim 1, wherein the protective plate module comprises a protective part with a detection end, and the protective part is installed on an end face of one end of the case in a manner that the detection end points to the bare cell.

15. The battery according to claim 14, wherein the tabs comprise a first electrode tab and a second electrode tab.

16. The battery according to claim 15, wherein a size of the recess in a direction from the first electrode tab to the second electrode tab ranges from 3 mm to 20 mm, and/or a size of the recess in a length extension direction of the first electrode tab ranges from 2 mm to 5 mm.

17. The battery according to claim 15, wherein the protective part comprises a first connection end and a second connection end, the first connection end is connected to the first electrode tab, and the second connection end is connected to a circuit board assembly.

18. The battery according to claim 17, wherein the battery cell comprises a first connection portion disposed outside the case, the first electrode tab is electrically connected to the first connection portion, and the first electrode tab is electrically connected to the first connection end through the first connection portion.

19. The battery according to claim 18, wherein the battery cell comprises a first metal plate connecting the protective part and the first connection portion, the first metal plate comprises a first flat plate portion and a second flat plate portion which are distributed in a stepped manner, and the first flat plate portion is located between the second flat plate portion and a body; and
the first flat plate portion is connected to the protective part, and the second flat plate portion is connected to the first connection portion.

20. The battery according to claim 18, wherein the battery cell comprises a second metal plate connecting the protective part and the circuit board assembly, the second metal plate comprises a first connection tab connected to the second connection end and a sheet-like body, and an end, away from the second connection end, of the sheet-like body is connected to the circuit board assembly.

21. The battery according to claim 20, wherein an end, away from the second connection end, of the sheet-shaped body comprises a second connection tab, and the sheet-shaped body is connected to the circuit board assembly through the second connection tab.

22. The battery according to any one of claims 14 to 21, further comprises: a circuit board assembly, wherein the battery cell comprises at least two battery cells, and the at least two battery cells are symmetrically distributed along the circuit board assembly.

23. The battery according to claim 22, wherein the circuit board assembly comprises a control circuit and a circuit board carrying the control circuit, and the at least two battery cells are distributed on two sides of the circuit board assembly.

24. The battery according to claim 22, wherein the battery comprises an insulation fastening unit enclosing the battery cell and the circuit board assembly.

25. The battery according to claim 24, wherein the insulation fastening unit comprises an insulation film, the insulation film comprises an insulation film base material layer, and the insulation film base material layer is bonded to the battery cell and/or the circuit board assembly through an insulation film adhesive layer.

26. The battery according to claim 25, wherein the insulation film comprises an insulation film heat-conductive layer enclosing the insulation film base material layer, the insulation film comprises a plurality of insulation film adhesive layers, and one layer of the plurality of insulation film adhesive layers is distributed between the insulation film heat-conductive layer and the insulation film base material layer.

27. The battery according to any one of claims 24 to 26, wherein the insulation fastening unit further comprises an adhesive-fixed bracket disposed between an insulation film and the circuit board assembly and/or the battery cell.

28. An electronic device, comprising:
a device body, wherein the device body has a battery accommodating compartment;
the battery according to any one of claims 1 to 27, wherein the battery is disposed in the battery accommodating compartment and is electrically connected to the device body.
